# EUROPEAN PATENT APPLICATION

(11) **EP 2 663 168 A2**
(43) Date of publication of application: **13.11.2013**
(21) Application number: 13002332.8
(22) Date of filing: 30.04.2013
(51) Int. Cl.: H05H 1/34

(54) **Plasma torch of non-transferred and hollow type**

(30) Priority: 07.05.2012 KR 20120048182
(71) Applicant: GS Platech Co., Ltd., Daejeon 305-811 (KR)
(72) Inventor: Hwang, Soon-Mo, 138-240 Seoul (KR); Kim, Young-Suk, 305-510 Daejeon (KR); Yoo, Byung-Ju, 305-756 Daejeon (KR); Kim, Myung-Gyu, 306-777 Daejeon (KR)
(74) Representative: Laufhütte, Dieter

(57) **Abstract**

Disclosed is a non-transferred and hollow type plasma torch 100. The plasma torch includes a rear torch unit 10 and a front torch unit 20 which are connected through an insulating body 30. The insulating body 30 is made of an insulator, is injected with gas required to generate plasma, and includes an inflow chamber 34 that may move the injected gas. The rear torch unit 10 coupled with a rear side of the insulation body 30 communicates with the inflow chamber 34 of the insulating body 30 and has a magnetic coil generating a magnetic field within a cavity of the rear electrode 19 wound around an outer circumferential surface thereof. The front torch unit 20 disposed at a front side of the insulating body 30 so as to face the rear torch unit 10 communicates with the inflow chamber 34 of the insulating body 30 and has the front electrode 29 disposed therein. The front torch unit 20 does not include a magnetic coil winding the front electrode 29, and thus may be easily detached from the insulating body 30.

## Description

### [RELATED APPLICATIONS]

This application claims priority to Korean Patent Application No.10-2012-0048182, filed on May 7, 2012, in the Korean Intellectual Property Office, the entire disclosure of which is incorporated herein by reference.

### [BACKGROUND OF THE INVENTION]

### 1. Field of the Invention

The present invention relates to a non-transferred and hollow type plasma torch, and more particularly, to a non-transferred and hollow type plasma torch capable of easily performing a repair operation, such as replacement of an electrode.

### 2. Description of the Related Art

A plasma torch is an apparatus that generates and maintains a plasma arc column between electrodes. The plasma torch provides a reaction heat and a reaction gas during the application process, such that a reactant may be ionized and dissociated to be rapidly reacted.

Most of the plasma torches have a structure in which the plasma arc column is generated between the electrodes and is maintained by a flow velocity and a flow rate of gas injected between the electrodes. The plasma torch uses various kinds of gases, such as compressed air, oxygen, steam, and the like, according to applications. Therefore, the plasma torch is suitable to treat harmful wastes including many organic matters.

The hollow type plasma torch, which is a high-temperature pollution-free source, may be easily operated and control an operating current and a flow rate and a flow velocity of gas to control a temperature and a speed of plasma. As the gas injected into the plasma torch, gases having various pressures from a low vacuum pressure to a high atmospheric pressure are used.

As other major factors, the hollow type plasma torch includes a power supply that meets voltage and current conditions of the plasma torch, a water/gas system that supplies water (refrigerant) and plasma gas to the torch and controls a flow thereof, and a cooling line that extends a lifespan of a front electrode and a hollow type rear electrode.

The plasma torch heats plasma by changing electrical energy into heat energy due to an electrical resistance of the plasma arc column that is generated when current flows through the plasma arc column. In this case, the heated plasma temperature may reach 20,000 K or more. The plasma torch may obtain a heat source having an ultra high temperature and a large heat value, as compared with a conventional combustion type heat source.

Further, a temperature at an arc root of an electrode surface contacting plasma is higher than a melting point of the electrode, such that an erosion of the electrode may be minimized by the rotation, movement, or efficient cooling of the arc root. The plasma torch may be used to heat and melt a solid subjected to a chemical reaction, heat or evaporate a solid or a liquid, or ionize and dissociate a molecule. The process is performed in a refractory furnace that may endure a high temperature and a chemical reaction.

A conventional plasma torch includes an insulating body and a front torch unit and a rear torch unit each connected to both sides of the insulating body. The front torch unit and the rear torch unit are each wound with a magnetic coil. When the lifespan of the electrode is over according to the lapse of use time, in the conventional plasma torch, the front torch unit and the rear torch unit connected to both sides of the insulating body are disassembled to perform the electrode replacement.

However, the front torch unit and the rear torch unit include a cooling channel for efficient cooling. Further, since these torch units are each wound with the magnetic coil, it takes much time to disassemble the plasma torch into the insulating body, the front torch unit, and the rear torch unit so as to replace the electrode.

Further, the plasma torch has a weight of several hundred kg or more and is used at a high temperature. Considering the use condition, it is very difficult to perform the electrode replacement of the plasma torch.

Further, in the plasma torch, in the case of the rear electrodes disposed at the back of the plasma torch, only the rear electrodes corresponding to an upper portion of the plasma torch among all the rear electrodes may be damaged according to the use. However, even when a portion of the rear electrodes is damaged, all the rear electrodes need to be replaced, such that much cost may be incurred.

### [SUMMARY OF THE INVENTION]

Accordingly, an aspect of the present invention is to provide a non-transferred and hollow type plasma torch capable of easily performing a repair operation, such as replacement of an electrode.

Another aspect of the present invention is to provide a non-transferred and hollow type plasma torch capable of easily replacing a front torch in a cartridge form and easily performing a repair operation.

In order to accomplish the above objects, the present invention provides the following.
(1) A non-transferred and hollow type plasma torch, including: an insulating body which has an inflow chamber as a gas injection space into which gas required to generate plasma is injected; a rear torch unit which includes a rear torch housing coupled with one side of the insulating body, and a tubular rear electrode which is disposed within the rear torch housing and has one end portion disposed within the rear torch housing and the other end portion disposed in the inflow chamber of the insulating body to communicate therewith; a front torch unit which includes a front torch housing coupled with the other side of the insulating body so as to face the rear torch housing and a tubular front electrode which is disposed within the front torch housing and has one end portion exposed to the outside by penetrating through the front torch housing and the other end portion disposed in the inflow chamber of the insulating body to communicate therewith; and a plug detachably attached to one end of the rear electrode.
(2) The plasma torch according to the above (1), the plasma torch further includes: a magnetic coil wound around an outer circumferential surface of the rear torch housing.
(3) The plasma torch according to the above (1), the rear torch housing is separately coupled with the insulating body.
(4) The plasma torch according to the above (1), the front torch housing is separately coupled with the insulating body.
(5) The plasma torch according to the above (1), the insulating body is formed in a tubular shape; and the front torch housing and the rear torch housing are longitudinally disposed at both sides of the insulating body.
(6) The plasma torch according to the above (1), the rear electrode is separately coupled with the rear torch housing.
(7) The plasma torch according to the above (1), the front electrode is separately coupled with the front torch housing.
(8) The plasma torch according to the above (1), the plasma torch further includes: at least one of a front torch cooling part which injects and discharges a first cooling fluid into and from the inside of the front torch housing in order to cool the front torch and a rear torch cooling part which injects and discharges a second cooling fluid into and from the rear torch housing in order to cool the rear torch.
(9) The plasma torch according to the above (1), the front torch unit and the rear torch unit are concentrically disposed in a row, and opposite ends of the front torch housing of the front torch unit and the rear torch housing of the rear torch unit are disposed to be spaced apart from each other at a predetermined distance.
(10) The plasma torch according to the above (9), the front electrode and the rear electrode are concentrically disposed in a row, and opposite ends of the front electrode and the rear electrode are disposed to be spaced apart from each other at a predetermined distance in the inflow chamber of the insulating body.
(11) The plasma torch according to the above (9), the opposite ends of the front torch housing of the front torch unit and the rear torch housing of the rear torch unit are configured to protrude into the inflow chamber of the insulating body.
(12) The plasma torch according to the above (11), the opposite ends of the front torch housing of the front torch unit and the rear torch housing of the rear torch unit are configured to protrude into the inflow chamber of the insulating body.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a cross-sectional view illustrating a plasma torch according to an embodiment of the present invention;
FIG. 2 is an exploded cross-sectional view of the plasma torch according to the embodiment of the present invention; and
FIG. 3 is a cross-sectional view illustrating a state in which a rear electrode is separated from a rear torch unit.

### [DETAILED DESCRIPTION OF EMBODIMENTS]

Hereinafter, preferable embodiments of the present invention will be described with reference to the accompanying drawings. Prior to this, terms or words used in the specification and claims should not be construed as limited to a lexical meaning, and should be understood as appropriate notions by the inventor based on that he/she is able to define terms to describe his/her invention in the best way to be seen by others. Therefore, embodiments and drawings described herein are simply exemplary and not exhaustive, and it will be understood that various modifications and equivalents may be made to take the place of the embodiments.

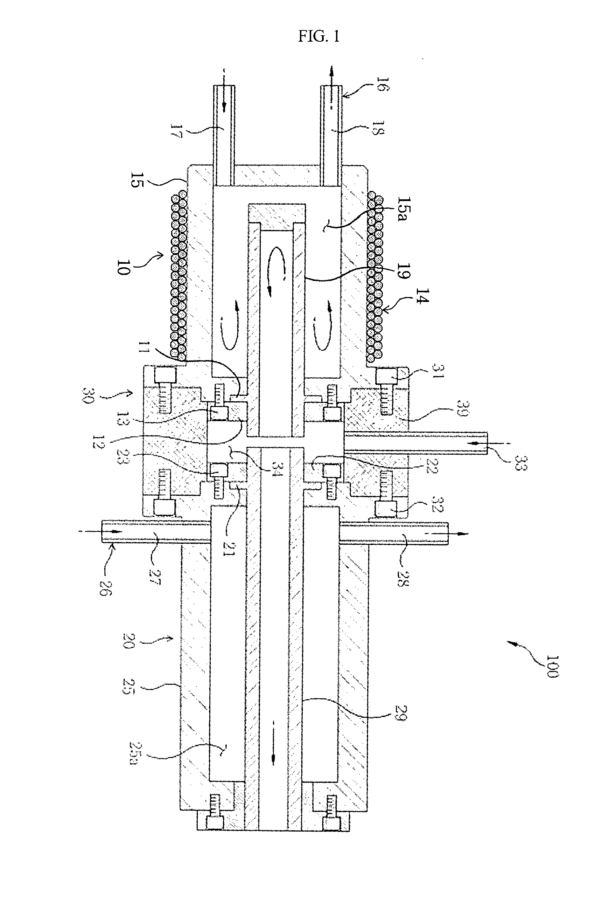

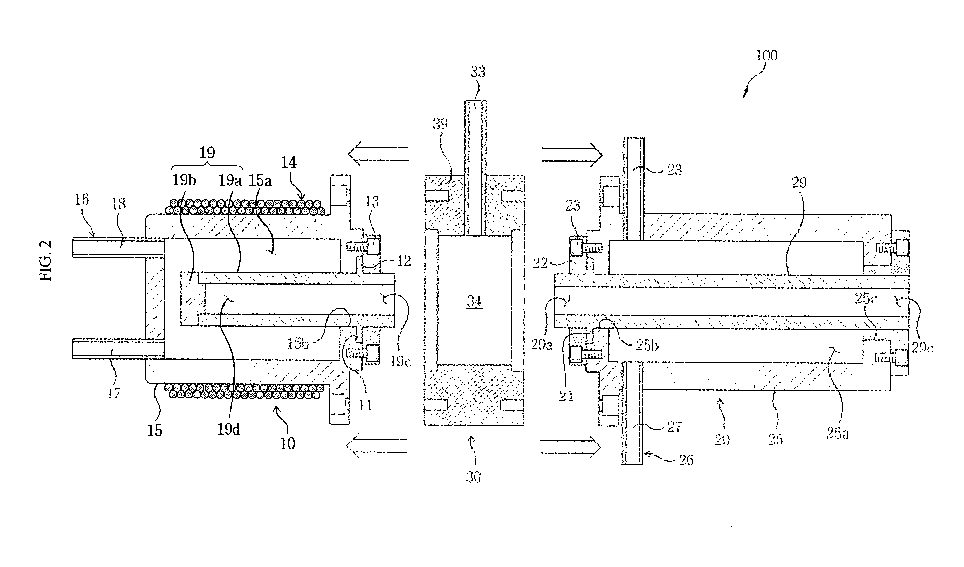

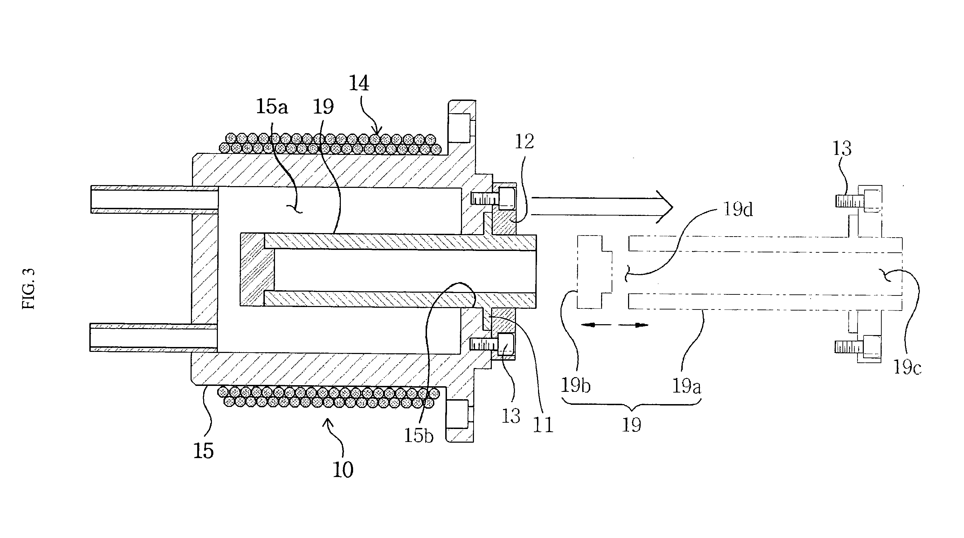

FIG. 1 is a cross-sectional view illustrating a plasma torch according to an embodiment of the present invention, FIG. 2 is an exploded cross-sectional view of the plasma torch according to the embodiment of the present invention, and FIG. 3 is a cross-sectional view illustrating a state in which a rear electrode is separated from a rear torch unit.

Referring to FIGS. 1 to 3, a plasma torch 100 according to an embodiment of the present invention includes an insulating body 30 and a rear torch unit 10 and a front torch unit 20 each connected to both sides of the insulating body 30. The insulating body 30 is made of an insulator and has an inflow chamber 34 formed therein, as a gas injection space into which a plasma reaction gas (hereinafter, briefly referred to as "gas") is injected. The rear torch unit 10 includes a rear torch housing 15 which is coupled with one (i.e. a rear) side of the insulating body 30 and a tubular rear electrode 19 of which one end portion is disposed within the rear torch housing 15 and the other end portion disposed in the inflow chamber 34 to communicate therewith. Further, the front torch unit 20 includes a front torch housing 25 which is coupled with the other (i.e. a front) side of the insulating body 30 so as to face the rear torch housing 15 and a tubular front electrode 29 of which one end portion is disposed to penetrate through the front torch housing 25 and the other end portion disposed in the inflow chamber 34 to communicate therewith. Herein, the "front" refers to a lower portion based on the insulating body 30 and the "rear" refers to an upper portion based on the insulating body 30 in drawings.

The plasma torch 100 having the foregoing configuration according to the embodiment of the present invention will be described in detail.

The insulating body 30 includes an insulator block 39 and a gas inlet 33. The insulator block 39 has the inflow chamber 34 formed therein, which is a space into which gas is injected through the gas inlet 33. The inflow chamber 34 may have, for example, a tubular shape. In this case, the rear torch unit 10 and the front torch unit 20 are longitudinally disposed at both sides of the insulating body 30. In this case, the insulator block 39 may be made of a Teflon material having good insulation. The gas is injected into the inflow chamber 34 through the gas inlet 33 that is connected to one portion of the insulator block 39. In this case, as the gas, various gases, such as compressed air, oxygen, steam, and the like, may be used according to applications.

The rear torch unit 10 includes the rear torch housing 15, the rear electrode 19, the magnetic coil 14, and a rear torch cooling part 16.

The rear torch housing 15 has a tubular shape of which one end portion is opened and an end portion thereof provided with an opening 15b is separately coupled with the rear side of the insulating body 30. For example, the rear torch housing 15 may be fixed to the insulating body 30 by bolts 31, and the like.

The rear electrode 19 has a tubular shape of which one end is opened. Here, one (i.e. a rear) end portion of the rear electrode 19 is disposed within the rear torch housing 15 so as to define a sealed space 15a between an outer circumferential surface of the rear electrode 19 and an inner wall of the rear torch housing 15. The other (i.e. a front) end portion of the rear electrode 19 is connected to the insulating body 30 and has a front opening 19c which is disposed in the inflow chamber 35 to communicate therewith.

In this case, the rear electrode 19 may be separately coupled with the rear torch housing 15. Referring to FIG. 3, the rear electrode 19 is provided with a locking piece 11 for stably fixing the rear electrode 19 which is inserted through the opening 15b of the rear torch housing 15. The locking piece 11 is disposed on an outer circumferential surface of the rear torch housing 15 that is close to the end portion provided with the front opening 19c. A front end portion provided with the opening 15b of the rear torch housing 15 includes a step portion on which the locking piece 11 is seated. After the rear electrode 19 is inserted into the rear torch housing 15 and the locking piece 11 is seated on the step portion, a rear electrode ring 12 is mounted on the front end portion of the rear torch housing 15 and is fastened with bolts 13, such that the rear electrode 19 is stably fixed to the rear torch housing 15. In this case, the sealed space 15a is defined between the rear electrode 19 and the rear torch housing 15 and the front opening 19c of the rear electrode 19 is exposed to the outside through the opening 15b of the rear torch housing 15.

Bolt holes are formed at an outer flange of the front side of the rear torch unit 10 which is coupled with the insulating body 30. At the time of assembling, the rear torch unit 10 is fixed to the insulating body 30 by the bolts 31 inserted into the bolt holes in the state in which the rear torch unit 10 contacts the rear side of the insulating body 30. In this case, the front opening 19c of the rear electrode 19 is disposed within the inflow chamber 34 of the insulating body 30.

The rear electrode 19 includes a tube portion 19a of which both ends are opened and a conductive plug 19b which is detachably inserted into a rear opening 19d of the tube portion 19a. Therefore, at the time of the replacement of the rear electrode 19, only the eroded plug 19b may be separated from the tube portion 19a and replaced. Further, the tube portion 19a communicates with the inflow chamber 34 of the insulating body 30 through the front opening 19c into which the plug 19b is not inserted.

Since the rear electrode 19 disposed in the rear torch unit 10 according to the present embodiment has a structure which includes the tube portion 19a and the plug 19b inserted into the rear opening 19d, at the time of replacing the rear electrode 19, only the eroded plug 19b is separated from the tube portion 19a and replaced, such that cost involved in the replacement of the rear electrode may be minimized.

The magnetic coil 14 is a lead-in wire having a solenoid form for the rear electrode 19 and is wound around the outer circumferential surface of the rear torch housing 15. The magnetic coil 14 generating a magnetic field within a cavity of the rear electrode 19 has one end connected to a power supply (not illustrated) and the other end connected with the rear torch housing 15, such that the magnetic coil 14 may be electrically connected to the rear electrode 19. That is, in order to prevent the plasma arc due to the concentrated current of the rear electrode 19 from being concentrated to one spot, a principle of forming a self induced magnetic field by winding the magnetic coil 14 around the rear electrode 19 in the solenoid form is used. Further, the arc of the plasma torch 100 rotates by a rotating magnetic field that is generated by composition of an azimuthal magnetic field generated by the plasma arc current and an axial magnetic field generated by current flowing in the magnetic coil 14 disposed in a solenoid form. Therefore, the erosion is prevented and the heat damage is reduced, due to the concentration of arc on the electrode surface.

In the related art, in order to form a magnetic field, a separate power supply for forming a magnetic field as well as a power supply for the plasma torch 100 is required. However, the present embodiment may form a magnetic field only by a main power supply for the plasma torch 100 without an additional power supply for forming a magnetic field to reduce cost.

Further, a conventional plasma torch needs to include a separate power supply control apparatus which controls a magnetic field. However, the plasma torch 100 according to the present embodiment may control the strength of magnetic field by itself, in response to the strength of arc.

The rear torch unit 10 may include the rear torch cooling part 16 which winds around the circumference of the rear electrode 19 in order to prevent the rear torch unit 10 and the rear electrode 19 from overheating. The rear torch cooling part 16 includes a coolant inlet 17 which injects a coolant into the sealed space 15a along an arrow direction and a coolant outlet 18 which withdraws the coolant cooling the rear electrode 19 along an arrow direction. The coolant inlet 17 and the coolant outlet 18 communicate with the sealed space 15a of the rear torch housing 15. For example, the coolant inlet 17 and the coolant outlet 18 may be connected to an opposite side of the opening 15b of the rear torch housing 15.

Meanwhile, the front torch unit 20 includes the front torch housing 25, the front electrode, and a front torch cooling part 26.

The front torch housing 25 has a tubular shape of which both ends are opened and a rear portion at which one (i.e. a rear) opening 25b is formed is separately coupled with one side of the insulating body 30. For example, the front torch housing 25 may be coupled with the front side of the insulating body 30 by bolts 32, and the like. Since the front torch unit 20 does not include a magnetic coil, the front torch unit 20 may be easily separated from the insulating body 30 after the front torch housing 25 is separated from the insulating body 30.

The front electrode 29 has a tubular shape of which both ends are opened and is disposed within the front torch housing to penetrate through the front torch housing 25 to define a sealed space 25a between an outer circumferential surface of the front electrode 29 and an inner wall of the front torch housing 25. One end, that is, the rear end of the front electrode 29 is disposed within the inflow chamber 34 of the insulating body 30 through the rear opening 25b and the other end, that is, the front end thereof is exposed to the outside through a front opening 25c of the front torch housing 25.

In this case, the front electrode 29 may be separately coupled with the front torch housing 25. Referring to FIGS. 1 and 2, the front electrode 19 is also provided with a locking piece 21 for stably fixing the front electrode 29 which is inserted through the rear opening 25b of the front torch housing 25. The locking piece 21 is formed on an outer circumferential surface of the front torch housing 25 that is close to a rear end portion provided with a rear opening 29a. The rear end portion provided with the rear opening 25b of the front torch housing 25 includes a step portion on which the locking piece 21 is seated. After the front electrode 29 is inserted into the front torch housing 25 and the locking piece 21 is seated of the step portion, a front electrode ring 22 is mounted on the rear end portion of the front torch housing 25 and is fastened with bolts 32, such that the front electrode 29 is stably fixed to the rear torch housing 25. In this case, the foregoing sealed space 25a is defined between the front electrode 29 and the front torch housing 25 and the rear opening 29a of the front electrode 29 is exposed to the outside through the rear opening 25b of the front torch housing 25.

Bolt holes are formed at an outer flange of the rear side of the front torch unit 12 which is coupled with the insulating body 30. At the time of assembling, the front torch unit 20 is fixed to the insulating body 30 by the bolts 33 inserted into the bolt holes in the state in which the front torch unit 10 contacts the front side of the insulating body 30. In this case, the rear opening 29a of the front electrode 29 is disposed within the inflow chamber 34 of the insulating body 30 at a predetermined distance from the front opening 19c of the rear electrode 19.

The front torch unit 20 may also include the front torch cooling part 26 which winds around the circumference of the front electrode 29 in order to prevent the front torch unit 20 and the front electrode 29 from overheating. The reaction gas injected from the gas inlet 33 forms turbulence. During this process, the front electrode 29 is cooled and the overall heat efficiency is improved. The front torch cooling part 26 includes a coolant inlet 27 which injects a coolant into the sealed space 25a along an arrow direction and a coolant outlet 28 which withdraws the coolant cooling the front electrode 29 along an arrow direction. The coolant inlet 27 and the coolant outlet 28 communicate with the sealed space 25a of the front torch housing 25. For example, the coolant inlet 27 and the coolant outlet 28 may be connected to the rear end of the front torch housing 25 which is close to the insulator block 39.

In the plasma torch 100 according to the present embodiment, the rear torch housing 15 and the front torch housing 25 are coupled through the insulator block 39 and the rear torch housing 15 and the front torch housing 25 are separately coupled with the insulating block 39 by a fastener, such as the bolts 31 and 32. That is, the front and rear torch housings 15 and 25 are easily separated from the insulator block 39, such that a repair operation, such as the replacement of the electrode, may be easily performed. In particular, since the front torch unit 20 according to the present embodiment is a cartridge type without a magnetic coil, only the front torch unit 20 is separated from the insulating body 30 by releasing the bolts 32 at the time of the replacement of the electrode, such that the replacement of the electrode can be easily performed. Further, in terms of the performance and repair or the easiness of the replacement of the plasma torch 100, the front torch unit 20 and the rear torch unit 10 may be concentrically disposed in a row and the opposite ends of the front torch housing of the front torch unit 20 and the rear torch housing of the rear torch unit 10 may be disposed to be spaced apart from each other at a predetermined distance. More preferably, the opposite ends of front torch housing of the front torch unit 20 and the rear torch housing of the rear torch unit 10 protrude into the inflow chamber 34.

Further, the rear electrode 19 and the front electrode 29 are electrically and mechanically connected through the insulator block 39. In this case, the front electrode 29 and the rear electrode 19 are concentrically disposed in a row. In this case, the opposite ends of the front electrode 29 and the rear electrode 19 may be disposed to be spaced apart from each other at a predetermined distance. More preferably, the opposite ends of the front electrode 29 and the rear electrode 19 are disposed to protrude into the inflow chamber 34.

The rear electrode 19 and the front electrode 29 are each cooled by the rear torch cooling part 16 and the front torch cooling part 26, such that the abrasion of the rear electrode 19 and the front electrode 29 may be minimized, thereby extending the lifespan of the plasma torch 100.

Meanwhile, the plasma torch 100 according to the present embodiment, other than the rear electrode 19, the front electrode 29, and the like, is made of stainless steel. The stainless steel has excellent mechanical strength, good corrosion resistance, lower heat conductivity than copper to reduce the heat loss to the outside of the plasma torch 100, and excellent transmission of magnetic field.

The coupling portions between the insulator block 39 and the rear torch housing 15 and the front torch housing 25, the rear electrode ring 12 and the rear electrode 19, the front electrode ring 22 and the front electrode, and the like, are sealed by using packing seals to prevent gas from being leaked.

An operation relationship of the plasma torch 100 configured as described above according to the present embodiment will be described.

The gas is injected through the gas inlet 33 and the gas pressure of the internal space in which the front electrode 29 is disposed is reduced. The gas pressure of the discharge portion, that is, the internal space in which the front electrode 29 is disposed is reduced, such that the plasma arc starts and is maintained at low voltage.

The plasma torch 100 includes the magnetic coil 14 which is wound on the outer circumferential surface of the rear electrode 1 having the solenoid form to provide the self induced magnetic field to the circumference of the rear electrode 19, thereby automatically forming the magnetic field. Therefore, the erosion due to the concentration of the arc on the surface of the rear electrode 19 may be reduced and the heat damage may be reduced.

Further, the repair operation of the plasma torch according to the present embodiment may be performed as follows.

First, the front torch unit 20 does not include a magnetic coil, such that the front torch unit 20 may be easily separated from the insulating body 30 in a cartridge form by releasing the bolt 32 and replaced.

The rear electrode 19 of the rear torch unit 10 has a structure in which the plug 19b is detachably attached to the tube portion 19a, such that the rear torch unit 10 may be separated from the insulating body 30 by releasing the bolts 31. Next, after the rear electrode ring 12 is separated by releasing the bolts 13 and the rear electrode 19 is separated from the rear torch housing 15, the plug 19b attached to the tube portion 19a of the rear electrode 19 is separated to be replaced with a new plug 19b.

As described above, in the plasma torch according to the embodiment of the present invention, the repair operation, such as the replacement of the electrode, may be easily performed. That is, since the front torch unit has the cartridge form without the magnetic coil, at the time of the replacement of the electrode, only the front torch unit may be separated from the insulating body and easily replaced.

Further, since the rear electrode disposed in the rear torch unit has a tube portion and a structure in which the tube portion is coupled with one end of the tube portion, only the eroded plug is separated and replaced at the time of the replacement of the rear electrode, such that cost involved in the replacement of the rear electrode may be minimized.

While the present invention has been described with reference to the preferred embodiments, it will be understood by those skilled in the related art that various modifications and variations may be made therein without departing from the scope of the present invention as defined by the appended claims.

## Claims

1. A plasma torch, comprising:
an insulating body which has an inflow chamber as a gas injection space into which gas required to generate plasma is injected;
a rear torch unit which includes a rear torch housing coupled with one side of the insulating body, and a tubular rear electrode which is disposed within the rear torch housing and has one end portion disposed within the rear torch housing and the other end portion disposed in the inflow chamber of the insulating body to communicate therewith;
a front torch unit which includes a front torch housing coupled with the other side of the insulating body so as to face the rear torch housing and a tubular front electrode which is disposed within the front torch housing and has one end portion exposed to the outside by penetrating through the front torch housing and the other end portion disposed in the inflow chamber of the insulating body to communicate therewith; and
a plug detachably attached to one end of the rear electrode.

2. The plasma torch of claim 1, further comprising:
a magnetic coil wound around an outer circumferential surface of the rear torch housing.

3. The plasma torch of claim 1, wherein the rear torch housing is separately coupled with the insulating body.

4. The plasma torch of claim 1, wherein the front torch housing is separately coupled with the insulating body.

5. The plasma torch of claim 1, wherein the insulating body is formed in a tubular shape; and
the front torch housing and the rear torch housing are longitudinally disposed at both sides of the insulating body.

6. The plasma torch of claim 1, wherein the rear electrode is separately coupled with the rear torch housing.

7. The plasma torch of claim 1, wherein the front electrode is separately coupled with the front torch housing.

8. The plasma torch of claim 1, further comprising:
at least one of a front torch cooling part which injects and discharges a first cooling fluid into and from the inside of the front torch housing in order to cool the front torch and a rear torch cooling part which injects and discharges a second cooling fluid into and from the rear torch housing in order to cool the rear torch.

9. The plasma torch of claim 1, wherein the front torch unit and the rear torch unit are concentrically disposed in a row, and
opposite ends of the front torch housing of the front torch unit and the rear torch housing of the rear torch unit are disposed to be spaced apart from each other at a predetermined distance.

10. The plasma torch of claim 9, wherein the front electrode and the rear electrode are concentrically disposed in a row, and
opposite ends of the front electrode and the rear electrode are disposed to be spaced apart from each other at a predetermined distance in the inflow chamber of the insulating body.

11. The plasma torch of claim 9, wherein the opposite ends of the front torch housing of the front torch unit and the rear torch housing of the rear torch unit are configured to protrude into the inflow chamber of the insulating body.

12. The plasma torch of claim 11, wherein the opposite ends of the front torch housing of the front torch unit and the rear torch housing of the rear torch unit are configured to protrude into the inflow chamber of the insulating body.
